# EUROPEAN PATENT APPLICATION

(11) **EP 1 505 846 A1**
(43) Date of publication of application: **09.02.2005**
(21) Application number: 02807398.9
(22) Date of filing: 10.05.2002
(51) Int. Cl.: H04Q 7/36

(54) **MOBILE COMMUNICATION SYSTEM, BASE STATION AND MOBILE STATION**

(71) Applicant: MITSUBISHI DENKI KABUSHIKI KAISHA, Tokyo 100-8310 (JP)
(72) Inventor: WAKABAYASHI, Hideji, Chiyoda-ku, Tokyo 100-8310 (JP)
(74) Representative: Sajda, Wolf E., Dipl.-Phys.
(86) International application number: PCT/JP2002/004585
(87) International publication number: WO 2003/096731

(57) **Abstract**

When a base station (1) transmits data to a mobile station (2) using a shared channel (HS-DSCH), the base station transmits the control information, which necessary for the mobile station to receive the data, to the mobile station (2) using a predetermined control channel (HS-SCCH). The mobile station (2) receives the control information from the predetermined control channel (HS-SCCH), and receives the data from the shared channel (HS-DSCH) referring to the control information.

## Description

### TECHNICAL FIELD

The present invention relates to a mobile communication system, a base station and a mobile station that carry out radio communication using a plurality of control channels and a shared channel.

### BACKGROUND ART

When a mobile communication system employs a W-CDMA scheme, a plurality of mobile stations share a single shared channel (a channel for carry data to be transmitted from a base station to the mobile stations). As for control channels for transmitting control information to be sent from the base station, a plurality of control channels are prepared.

To acquire data addressed to itself from the shared channel, a mobile station must receive control information addressed to itself from a control channel and refers to the control information. However, the mobile station cannot know among the control channels the control channel that carries the control information addressed to itself. Accordingly, the mobile station must always monitor the plurality of control channels.

Incidentally, Japanese patent application laid-open No. 2000-228645 discloses a mobile communication system that controls transmission intervals of the control channels in accordance with the number of current mobile stations in communication to reduce the transmit power of the base station. In the mobile communication system, however, it is necessary for each mobile station to monitor a plurality of control channels.

Since the conventional mobile communication system has the foregoing configuration, the mobile station can acquire data addressed to itself from the shared channel as long as it continuously monitors the plurality of control channels. However, the configuration having the mobile station always monitor the plurality of control channels offers problems of increasing the power consumption of the mobile station, and increasing the load of the receiving processing of the mobile station.

The present invention is implemented to solve the foregoing problems. Therefore it is an object of the present invention to provide a mobile communication system and a base station capable of reducing the power consumption and the load of the receiving processing of the mobile station.

Another object of the present invention is to provide a mobile station capable of reducing the power consumption and the load of the receiving processing.

### DISCLOSURE OF THE INVENTION

According to a first aspect of the present invention, there is provided a mobile communication system wherein a base station transmits, when transmitting data to a mobile station using a shared channel, control information, which is necessary for the mobile station to receive the data, to the mobile station using a predetermined control channel; and the mobile station receives the control information from the predetermined control channel, and receives the data from the shared channel referring to the control information.

Thus, it offers an advantage of being able to reduce the power consumption and the load of the receiving processing of the mobile station.

According to a second aspect of the present invention, there is provided a base station that transmits, when transmitting data to a mobile station using a shared channel, control information, which is necessary for the mobile station to receive the data, using a predetermined control channel.

Thus, it offers an advantage of being able to reduce the power consumption and the load of the receiving processing of the mobile station.

The base station may transmit the control information intermittently, when transmitting the control information to the mobile station using the predetermined control channel.

Thus, it offers an advantage of being able to further reduce the power consumption and the load of the receiving processing of the mobile station.

The base station may accept changes of a transmitting cycle of the control information.

Thus, it offers an advantage of being able to change the transmitting cycle as appropriate in accordance with communication conditions.

The base station may switch the control channel that transmits the control information in accordance with preset switching conditions.

Thus, it offers an advantage of being able to make effective use of the plurality of control channels.

The base station may transmit switching information about the control channel to the mobile station, when switching the control channel.

Thus, it offers an advantage of being able to make effective use of the plurality of control channels.

The base station may divide the mobile stations into groups in accordance with a transmission volume of data to each mobile station, select simultaneous transmission target mobile stations from the groups, and assign the plurality of control channels to the simultaneous transmission target mobile stations.

Thus, it offers an advantage of being able to make effective use of the single shared channel.

According to a third aspect of the present invention, there is provided a mobile station, wherein when the base station transmits, when transmitting data using the shared channel, control information, which is necessary for the mobile station to receive the data, using a predetermined control channel, the mobile station receives the control information from the predetermined control channel, and receives the data from the shared channel referring to the control information.

Thus, it offers an advantage of being able to reduce the power consumption and the load of the receiving processing.

The mobile station may intermittently receive the control information transmitted from the base station via the predetermined control channel.

Thus, it offers an advantage of being able to further reduce the power consumption and the load of the receiving processing of the mobile station.

The mobile station may accept changes of a receiving cycle of the control information.

Thus, it offers an advantage of being able to change the transmitting cycle as appropriate in accordance with communication conditions.

The mobile station may switch the control channel for receiving the control information in accordance with preset switching conditions.

Thus, it offers an advantage of being able to make effective use of the plurality of control channels.

The mobile station may receive switching information about the control channel from the base station, and switch the control channel in accordance with the switching information.

Thus, it offers an advantage of being able to make effective use of the plurality of control channels.

### BRIEF DESCRIPTION OF THE DRAWINGS

Fig. 1 is a block diagram showing a configuration of a mobile communication system of an embodiment 1 in accordance with the present invention;
Fig. 2 is a block diagram showing an internal configuration of a base station;
Fig. 3 is a block diagram showing an internal configuration of a mobile station;
Fig. 4 is a diagram illustrating a structure of control channels and that of a shared channel;
Fig. 5 is a diagram illustrating a structure of the control channels and that of a shared channel;
Fig. 6 is a diagram illustrating a structure of the control channels;
Fig. 7 is a diagram illustrating a structure of the control channels;
Fig. 8 is a diagram illustrating a structure of the control channels;
Fig. 9 is a diagram illustrating a structure of the control channels;
Fig. 10 is a diagram illustrating a structure of the control channels;
Fig. 11 is a diagram illustrating assignment of data to be transmitted to a shared channel when the sum total of the data is not uniform;
Fig. 12 is a diagram illustrating assignment of data to be transmitted to the shared channel when the sum total of the data is uniform;
Fig. 13 is a diagram illustrating a structure of the control channels and that of the shared channel; and
Fig. 14 is a flowchart illustrating an assignment procedure to the control channels.

### BEST MODE FOR CARRYING OUT THE INVENTION

The best mode for carrying out the invention will now be described with reference to the accompanying drawings to explain the present invention in more detail.

### EMBODIMENT 1

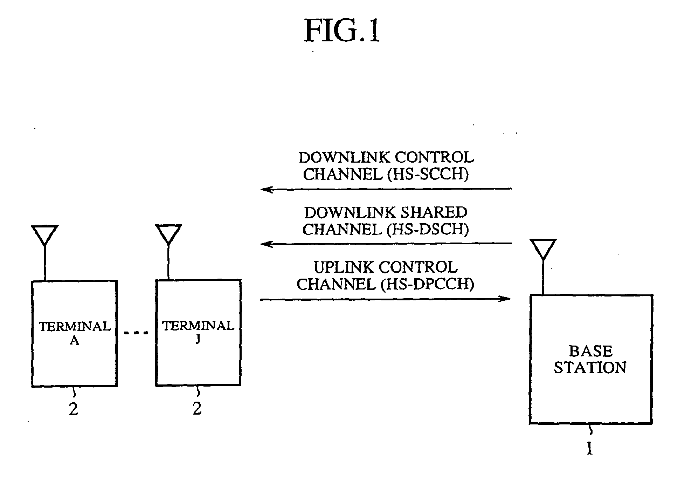

Fig. 1 is a block diagram showing a configuration of a mobile communication system of an embodiment 1 in accordance with the present invention. In Fig. 1, the reference numeral 1 designates a base station that transmits, when transmitting data to a mobile station 2 through a shared channel HS-DSCH, the control information, which is necessary for the mobile station 2 to receive the data, via a certain control channel HS-SCCH. Each reference numeral 2 designates the mobile station that receives the control information from the predetermined control channel HS-SCCH, and receives the data from the shared channel HS-DSCH referring to the control information. In the present embodiment 1, to identify each of the plurality of mobile stations 2, they are denoted as terminals A, B, ..., J as needed.

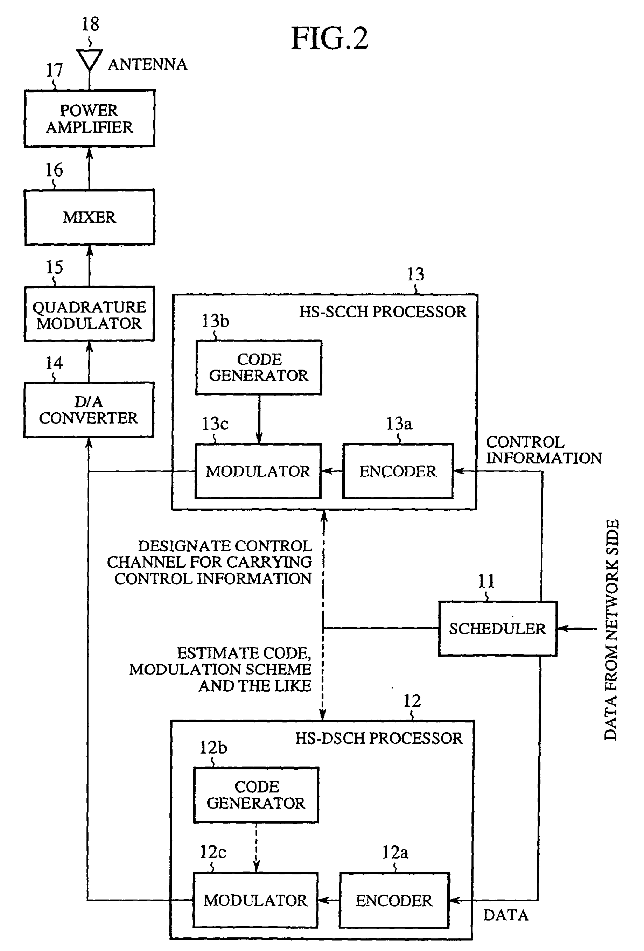

Fig. 2 is a block diagram showing an internal configuration of the base station 1. In Fig. 1, the reference numeral 11 designates a scheduler that supplies, when receiving transmission data from a network side, the transmission data to an HS-DSCH processor 12, supplies the control information necessary for receiving the transmission data to an HS-SCCH processor 13, and specifies the control channel HS-SCCH for carrying the control information and a modulation scheme. The control channel HS-SCCH for carrying the control information is set in the scheduler 11 in advance.

The reference numeral 12 designates the HS-DSCH processor for encoding and modulating the transmission data fed from the scheduler 11; 12a designates an encoder for encoding the transmission data fed from the scheduler 11; 12b designates a code generator for generating a scrambling code for identifying the destination mobile station 2 and the base station 1, and for generating a channelization code associated with the shared channel HS-DSCH; and 12c designates a modulator for modulating the transmission data after the encoding using the code produced by the code generator 12b.

The reference numeral 13 designates the HS-SCCH processor for encoding and modulating the control information fed from the scheduler 11; 13a designates an encoder for encoding the control information fed from the scheduler 11; 13b designates a code generator for generating a scrambling code for identifying the destination mobile station 2 and base station 1, and for generating a channelization code associated with the control channel HS-SCCH assigned by the scheduler 11; and 13c designates a modulator for modulating the control information after the encoding using the code produced by the code generator 13b.

The reference numeral 14 designates a D/A converter for converting, when receiving the digital modulation signals from the HS-DSCH processor 12 and HS-SCCH processor 13, the modulation signals to analog signals; 15 designates a quadrature modulator for carrying out quadrature modulation of the modulation signals passing through the D/A conversion by the D/A converter 14; 16 designates a mixer for carrying out the frequency conversion of the modulation signals passing through the quadrature modulation by the quadrature modulator 15, and for outputting high-frequency signals; 17 designates a power amplifier for amplifying the high-frequency signals output from the mixer 16; and 18 designates an antenna of the base station 1.

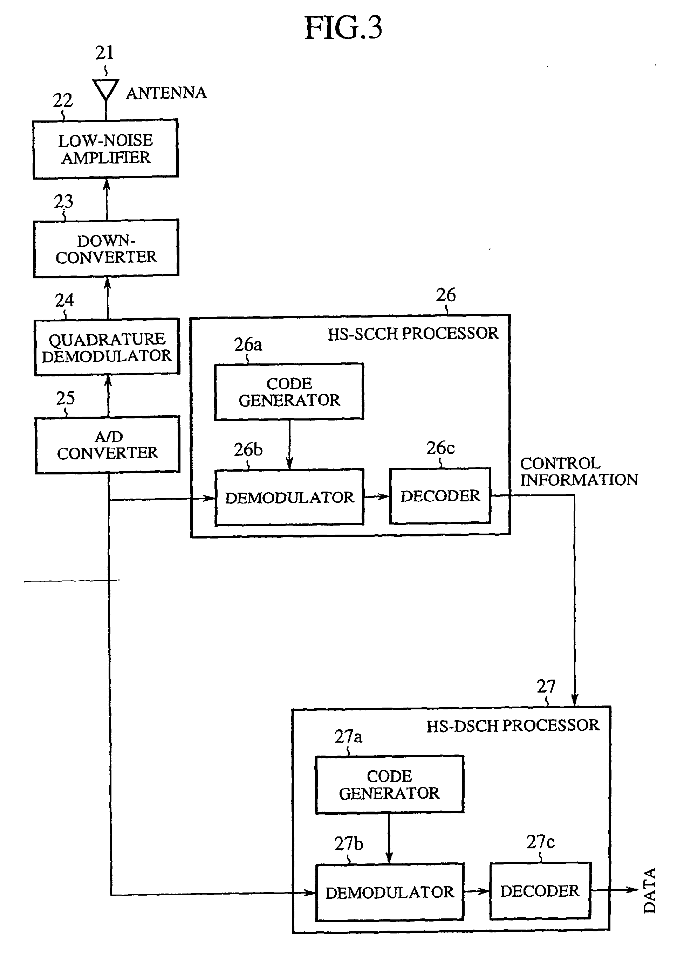

Fig. 3 is a block diagram showing an internal configuration of the mobile station 2. In Fig. 2, the reference numeral 21 designates an antenna of the mobile station 2; 22 designates a low noise amplifier for amplifying a high-frequency signal fed from the antenna 21; 23 designates a down-converter for decreasing the frequency of the high-frequency signal amplified by the low noise amplifier 22; 24 designates a quadrature demodulator for carrying out quadrature demodulation of the output signal of the down-converter 23, and for outputting analog modulation signal; and 25 designates an A/D converter for converting the analog modulation signal to a digital signal.

The reference numeral 26 designates an HS-SCCH processor for separating the predetermined HS-SCCH control channel from the modulation signal passing through the A/D conversion by the A/D converter 25, and for acquiring the control information from the control channel HS-SCCH; 26a designates a code generator for generating the same code as that generated by the code generator 13b of the base station 1; 26b designates a demodulator for separating the control channel HS-SCCH from the modulation signal passing through the A/D conversion by the A/D converter 25 using the code generated by the code generator 26a; and 26c designates a decoder for acquiring the control information by performing error-correction processing of the demodulation signal output from the demodulator 26b.

The reference numeral 27 designates an HS-DSCH processor for separating the shared channel HS-DSCH from the modulation signal passing through the A/D conversion by the A/D converter 25, and for acquiring the data addressed to the mobile station from the shared channel HS-DSCH using the control information acquired by the HS-SCCH processor 26; 27a designates a code generator for generating the same code as that generated by the code generator 12b of the base station 1; 27b designates a demodulator for separating the shared channel HS-DSCH from the modulation signal passing through the A/D conversion by the A/D converter 25 using the code generated by the code generator 27a, and for acquiring the data addressed to the mobile station from the shared channel HS-DSCH using the control information acquired by the HS-SCCH processor 26; and 27c designates a decoder for acquiring the data addressed to the mobile station by performing error-correction processing of the demodulation signal output from the demodulator 27b.

Next, the operation will be described.

When the base station 1 receives transmission data addressed to the terminal A from the network side, for example, it transmits the data using the shared channel HS-DSCH. In this case, as for the control information necessary for the terminal A to acquire the data addressed to itself from the shared channel HS-DSCH, the base station transmits the control information using the control channel HS-SCCH.

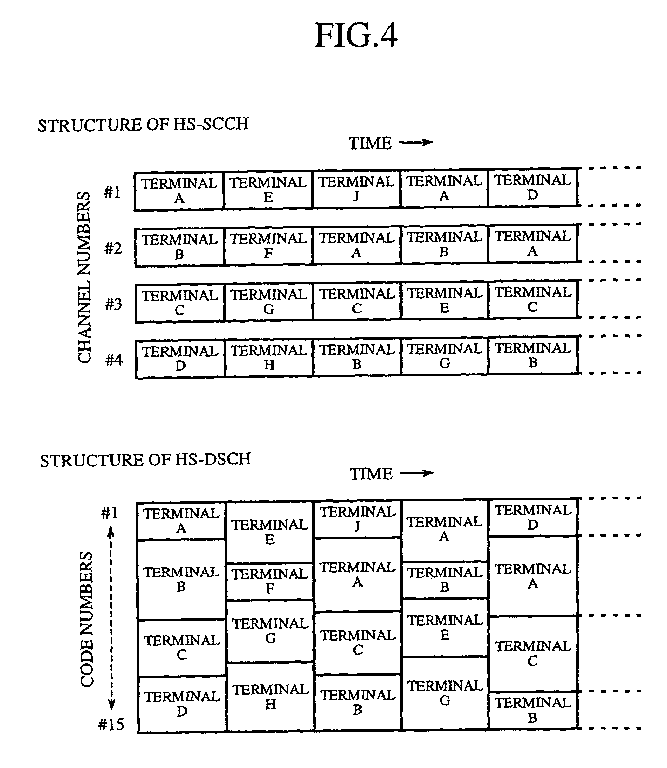

However, when the mobile communication system employs the W-CDMA scheme, it has a single shared channel HS-DSCH and the plurality of control channels HS-SCCH prepared as illustrated in Fig. 4. Accordingly, the terminal A cannot identify the control channel HS-SCCH that carries the control information addressed to itself. Conventionally, the terminal A must acquire the control information addressed to itself by monitoring the plurality of control channels HS-SCCH.

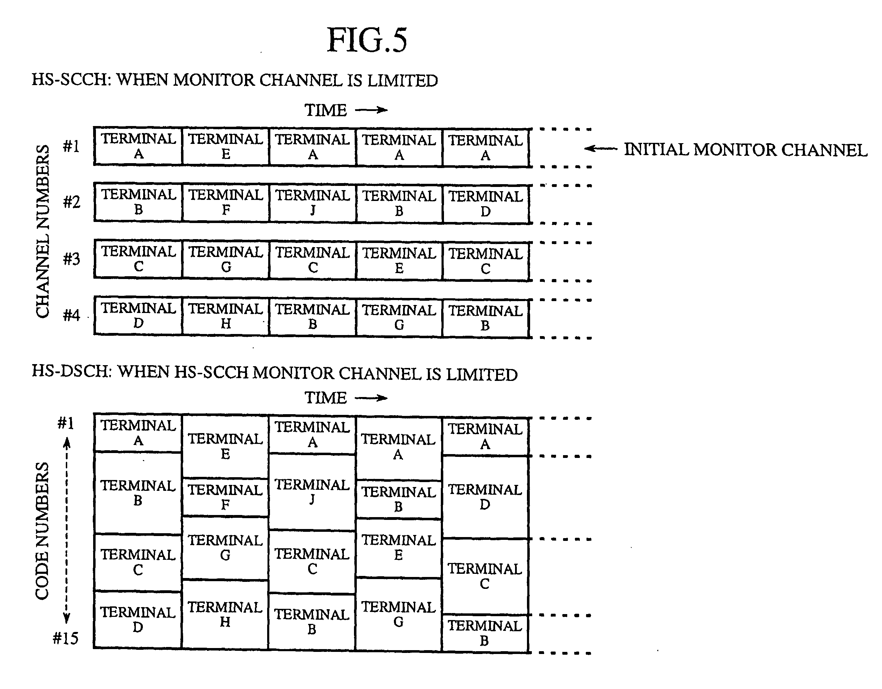

This increases the power consumption of the terminal A, and the load of the receiving processing of the terminal A. In view of this, in the present embodiment 1, it is predetermined between the base station 1 and the mobile station 2 that the control channel HS-SCCH (initial monitor channel) the base station 1 uses to transmit the control information to the terminal A is a control channel with a channel number #1 as illustrated in Fig. 5, and that the base station 1 transmits the control information addressed to the terminal A using the control channel HS-SCCH with the channel number #1.

Thus, the terminal A monitors only the control channel HS-SCCH with the channel number #1, acquires the control information addressed to itself from the control channel HS-SCCH with the channel number #1, and obtains the data addressed to itself from the shared channel HS-DSCH by using the control information.

As described above, the present embodiment 1 is configured such that when the base station 1 transmits data to the mobile station 2 using the shared channel HS-DSCH, the base station transmits the control information, which is necessary for the mobile station 2 to receive the data, to the mobile station 2 using the predetermined control channel HS-SCCH, and the mobile station 2 receives the control information from the predetermined control channel HS-SCCH, and then receives the data from the shared channel HS-DSCH referring to the control information. Thus, the present embodiment 1 offers an advantage of being able to reduce the power consumption and the load of the receiving processing of the mobile station 2.

### EMBODIMENT 2

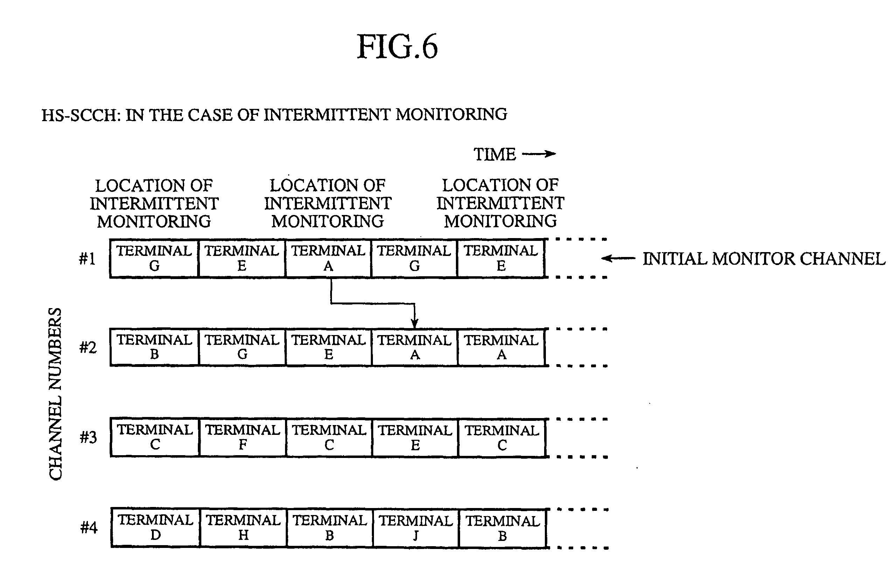

The foregoing embodiment 1 is described by way of example in which when the base station 1 transmits data to the mobile station 2 using the shared channel HS-DSCH, the base station 1 transmits the control information, which is necessary for the mobile station 2 to receive the data, to the mobile station 2 using the predetermined control channel HS-SCCH. In this case, the base station 1 can transmit the control information intermittently as illustrated in Fig. 6.

In the example of Fig. 6, the base station 1 transmits the control information addressed to the terminal A every other slot. Accordingly, the terminal A monitors the predetermined control channel HS-SCCH at every other slot to acquire the control information addressed to itself from the predetermined control channel HS-SCCH, and interrupts the receiving processing of the control information in the slots other than those assigned to the terminal.

Thus, the present embodiment 2 can reduce the power consumption and the load of the receiving processing of the mobile station 2 with a small reduction in the data throughput.

To prevent the reduction in the throughput, such a configuration is also possible in which when the terminal A obtains the control information from the initial monitor channel, the initial monitor channel is changed to the control channel HS-SCCH with the channel number #2 as illustrated in Fig. 6, for example, so that the terminal A receives the control information successively from the control channel HS-SCCH with the channel number #2.

In actual packet communication, the data transmission and transmission interruption take place rather at random, and once the data transmission is started, the transmission often continues for considerable time period. In such a case, using the foregoing method can efficiently prevent the reduction in the throughput.

### EMBODIMENT 3

The foregoing embodiment 2 is configured such that the base station 1 transmits the control information intermittently. The present embodiment 3 is configured such that the base station 1 accepts changes in the transmitting cycle of the control information, and the mobile station 2 accepts changes of the receiving cycle of the control information.

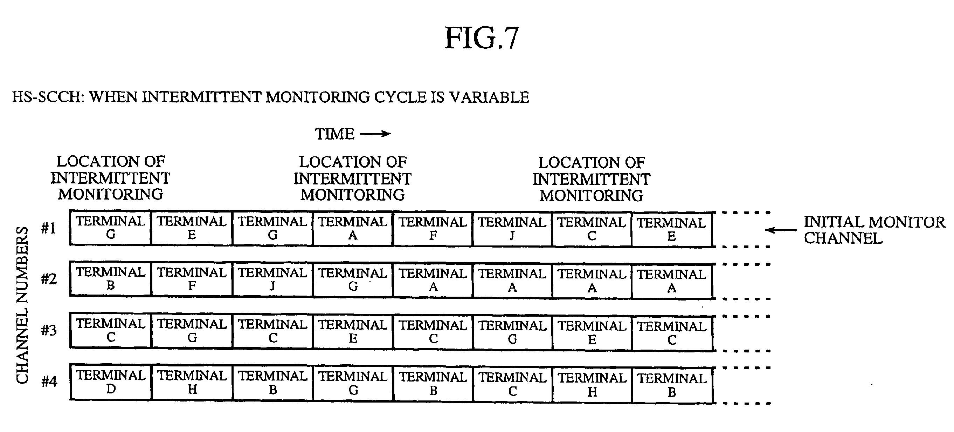

More specifically, when the base station 1 and mobile station 2 increase the cycle as illustrated in Fig. 7, the power consumption and the load of the receiving processing of the mobile station 2 can be further reduced.

Incidentally, when only the control channel HS-SCCH with the channel number #1 is used as the initial monitor channel, the control channel cannot accommodate a sufficient number of mobile stations 2, and hence the transmitting cycle of the control information is prolonged. In this case, the wait time from the time the scheduler 11 of the base station 1 receives data from the network side to the time the base station has a chance to actually transmit the data increases.

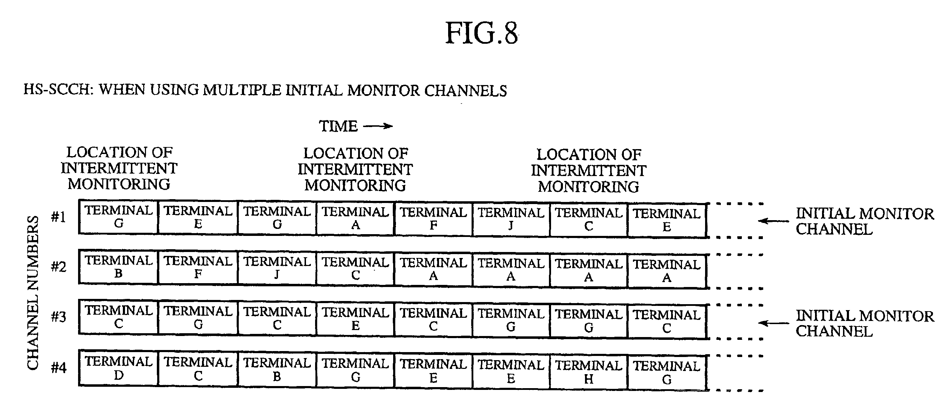

In such a case, a plurality of initial monitor channels are prepared as illustrated in Fig. 8 by dividing the mobile stations 2 to a plurality of groups, thereby ensuring the enough number of the accommodation. In the example of Fig. 8, the control channels HS-SCCH with channel numbers #1 and #3 are used as the initial monitor channels.

Thus, the present embodiment 3 can prevent the increase in the wait time, even though a great number of mobile stations 2 to be accommodated are present.

### EMBODIMENT 4

Although the foregoing embodiment 1 is configured such that the base station transmits the control information by using the control channel HS-SCCH with the channel number #1 without exception, this is not essential. For example, such a configuration is also possible that the base station 1 and mobile station 2 switch the control channel HS-SCCH in accordance with preset switching conditions.

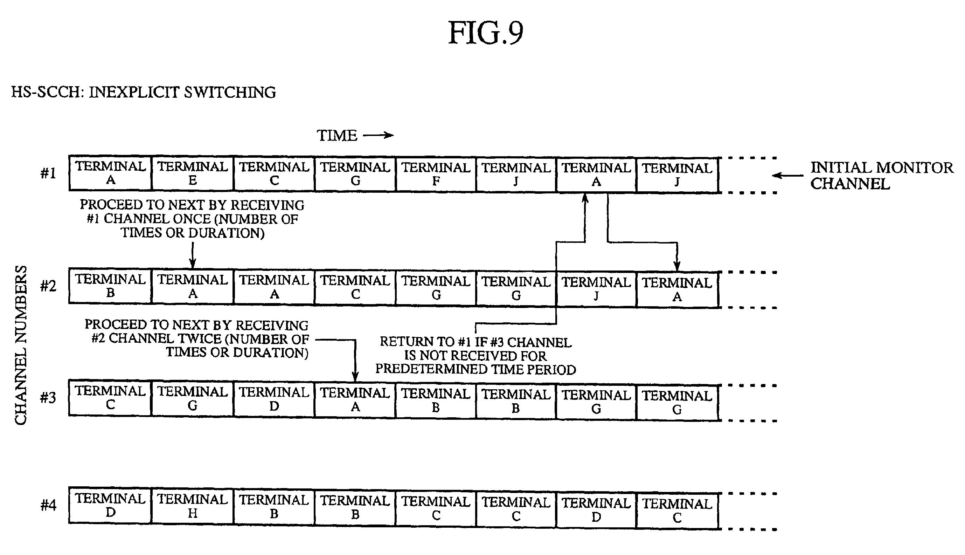

More specifically, the base station 1 and mobile station 2 have the same switching conditions preset (switching conditions are set considering such factors as the number of times of receiving the control information, and the duration of receiving it). For example, consider a case where the switching conditions are set between the base station 1 and terminal A such that the initial monitor channel is switched to the control channel HS-SCCH with the channel number #2, when the terminal A acquires the control information once from the initial monitor channel by intermittently monitoring the initial monitor channel. In this case, when the terminal A acquires the control information once from the initial monitor channel, the base station 1 and terminal A carry out the switching from the initial monitor channel to the control channel HS-SCCH with the channel number #2 as illustrated in Fig. 9.

In the example of Fig. 9, the base station 1 and terminal A have the following preset switching conditions as to the control channel HS-SCCH with the channel number #2. That is, the terminal A receives the control information continuously rather than intermittently, and when the terminal A receives the control information twice, the base station 1 and terminal A switches the control channel HS-SCCH with the channel number #2 to the control channel HS-SCCH with the channel number #3.

In addition, in the example of Fig. 9, the switching conditions are set such that when the control information is not transmitted for specified duration, the base station 1 and terminal A return the control channel HS-SCCH with the channel number #3 to the initial monitor channel.

According to the present embodiment 4, the base station 1 and mobile station 2 switch the control channel HS-SCCH in accordance with the preset switching conditions. Thus, the present embodiment 4 offers an advantage of being able to utilize the plurality of control channels HS-SCCH efficiently.

### EMBODIMENT 5

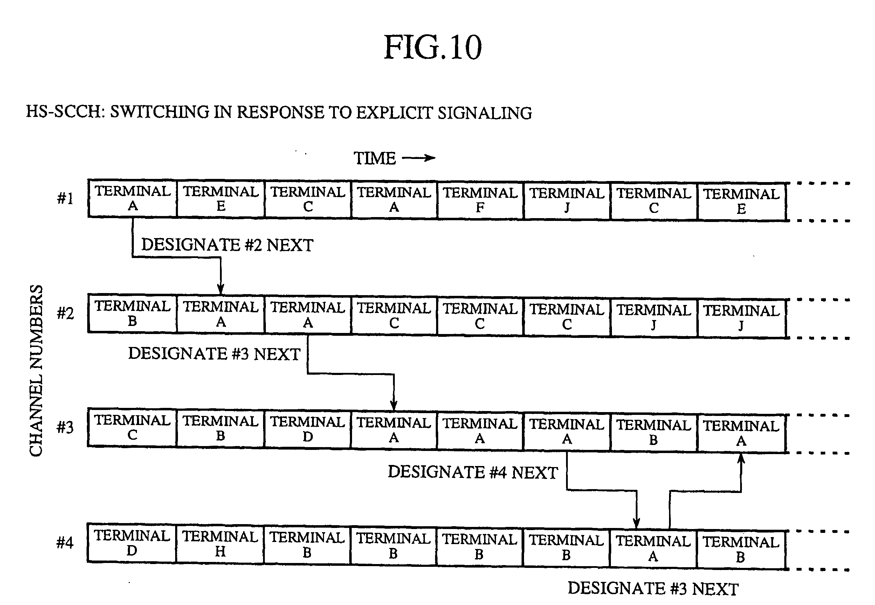

Although the foregoing embodiment 4 is configured such that the base station 1 and mobile station 2 switch the control channel HS-SCCH in accordance with the preset switching conditions, this is not essential. For example, as illustrated in Fig. 10, when the base station 1 switches the control channel HS-SCCH, the base station 1 transmits the switching information about the control channel HS-SCCH to the mobile station 2. Receiving the switching information about the control channel HS-SCCH from the base station 1, the mobile station 2 switches the control channel HS-SCCH in accordance with the switching information.

As a signaling method of the switching information, a method is conceivable of adding information bits to the control channel HS-SCCH before the switching. In this case, the position and method of embedding the information bits are not specifically limited.

### EMBODIMENT 6

Although not mentioned in particular in the foregoing embodiment 1, the following configuration is also possible to make effective use of the single shared channel HS-DSCH. Specifically, a configuration is also possible that divides the mobile stations 2 into groups in accordance with the volumes of data transmitted to the mobile stations 2, selects simultaneous transmission target mobile stations 2 from each group, and assigns a plurality of control channels HS-SCCH to the simultaneous transmission target mobile stations 2.

More specifically, it is configured as follows.

The shared channel HS-DSCH, the only one channel assigned to the service area of the base station 1, is shared by a plurality of mobile stations 2, and the data volumes to be transmitted to the mobile stations 2 can be varied by the number of codes. This makes it possible to assign radio resources flexibly to the individual mobile stations 2 in accordance with the data volumes. However, since the shared channel HS-DSCH has a fixed total capacity of transmitting data simultaneously, it cannot transmit the data volume beyond the capacity.

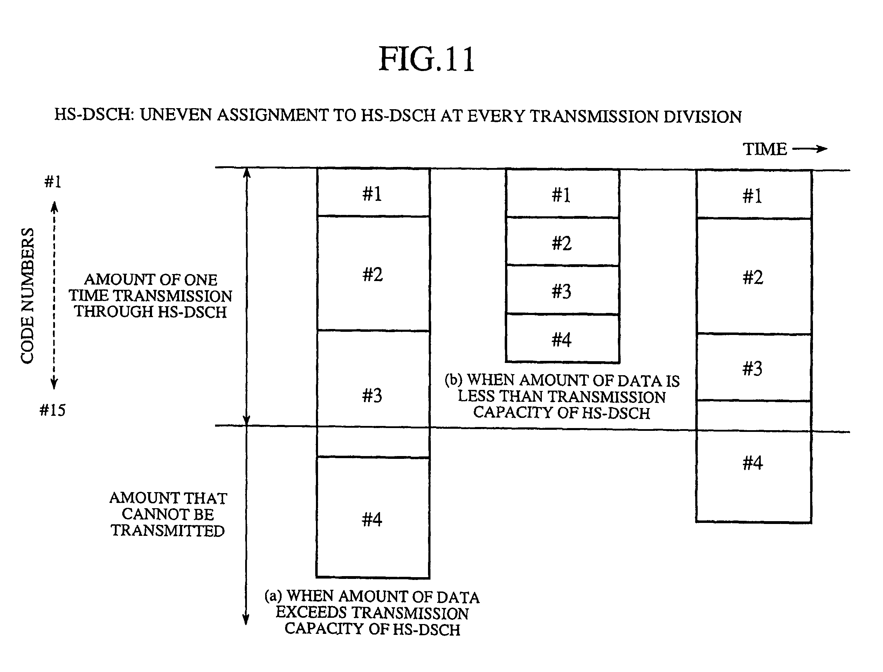

Fig. 11 illustrates an example of assigning data to the shared channel HS-DSCH, when the sum total of the data to be transmitted simultaneously is not uniform.

For example, unless the sum total of the data to be transmitted simultaneously to four mobile stations 2 is uniform, the volume that exceeds the number of codes available by the single shared channel HS-DSCH cannot be transmitted simultaneously as illustrated in Fig. 11(a). The volume exceeding the limit is transmitted next and later time, causing the reduction in the throughput.

On the other hand, when the sum total of the data is less than the number of codes available by the single shared channel HS-DSCH as illustrated in Fig. 11(b), the remaining amount becomes useless, resulting in inefficient assignment.

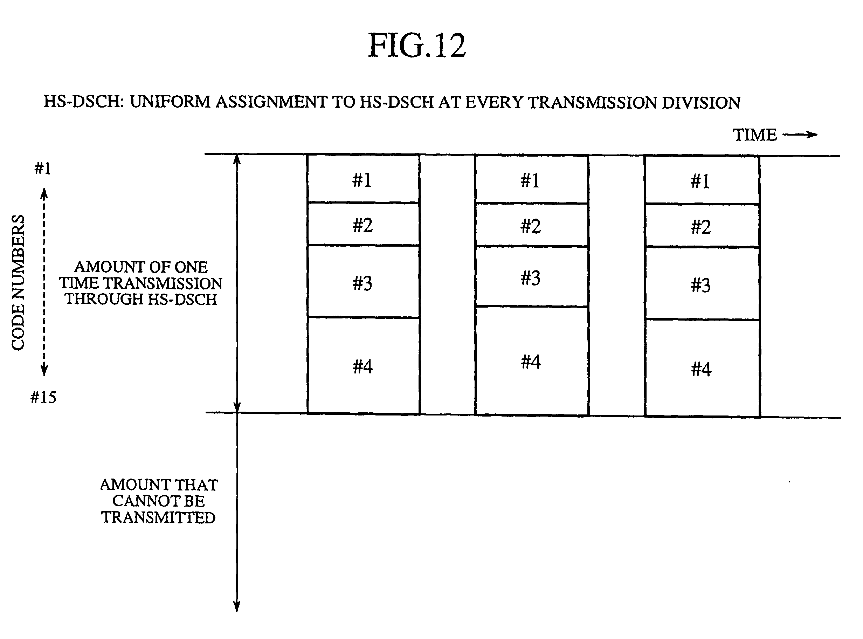

Fig. 12 illustrates an example of assigning data to the shared channel HS-DSCH, when the sum total of the data to be transmitted simultaneously is uniform.

For example, if the sum total of the data to be transmitted simultaneously to the four mobile stations 2 is uniform, the single shared channel HS-DSCH can utilize the number of codes effectively up to the limit, thereby being able to increase the efficiency.

To implement the uniform assignment as illustrated in Fig. 12, the mobile stations are divided into groups in accordance with the transmission volumes of data to the individual mobile stations 2, when assigning a plurality of control channels HS-SCCH to the mobile stations 2.

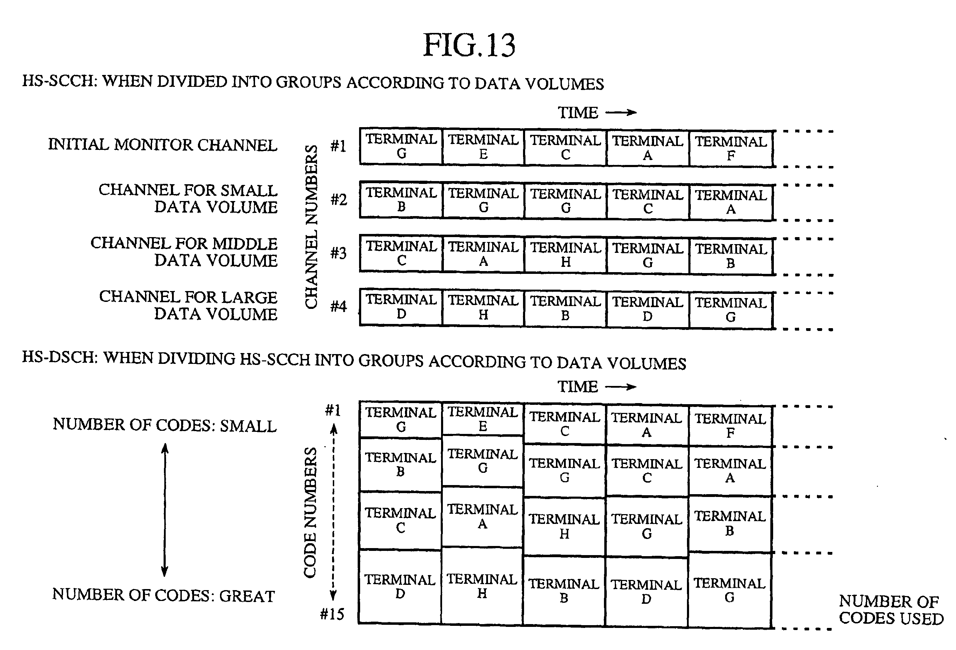

More specifically, as illustrated in Fig. 13, the individual control channels HS-SCCH are classified according to their applications such as the control channel HS-SCCH with the channel number #1 is for the initial monitor, the control channel HS-SCCH with the channel number #2 is for a small volume of data, the control channel HS-SCCH with the channel number #3 is for a meddle volume of data, and the control channel HS-SCCH with the channel number #4 is for a large volume of data. Thus, according to the data transmission volume to the individual mobile stations 2, the mobile stations 2 are each assigned to one of the control channels HS-SCCH.

In this case, the assignment is carried out at every transmission division in such a manner that the numbers of codes of the shared channel HS-DSCH become nearly uniform with respect to the mobile stations 2 in the individual control channels HS-SCCH.

The grouping of the mobile stations 2, however, can present the following problem. If the mobile stations 2 are assigned one-sidedly to one of the control channels HS-SCCH when transmitting data to the individual mobile stations 2 simultaneously, the data transmission chance to the individual mobile stations 2 is reduced in the control channel HS-SCCH of the group including a lot of mobile stations 2. On the other hand, it is likely that the control channel HS-SCCH in another group has no data to be transmitted to the mobile stations 2.

Accordingly, it is preferable from the viewpoint of the efficient assignment of the resources that the grouping of the individual mobile stations 2 be carried out as evenly as possible to the plurality of control channels HS-SCCH without being one-sided to a certain control channel HS-SCCH.

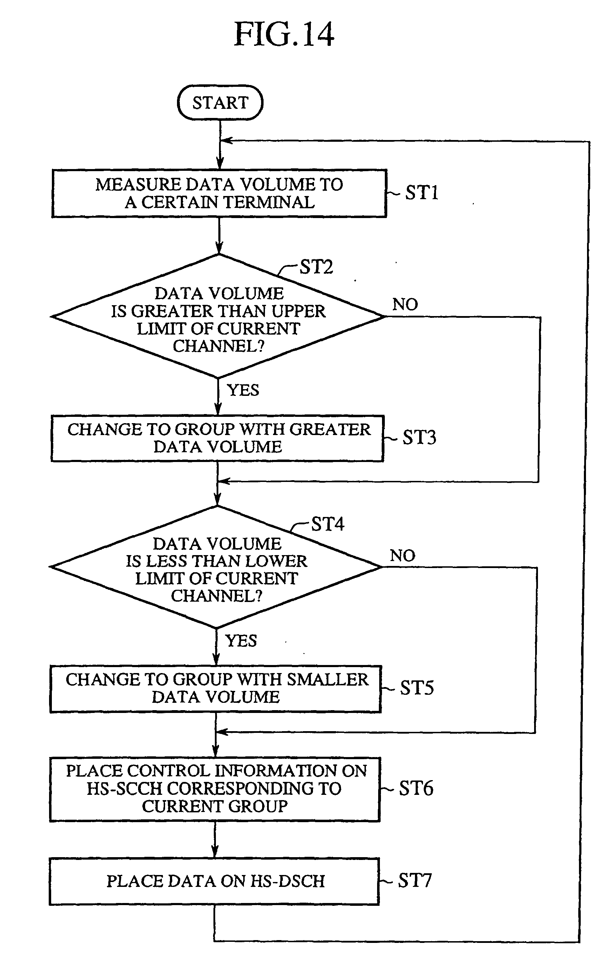

Fig. 14 is a flowchart illustrating assignment procedure of the control channels HS-SCCH.

When the base station 1 assigns a control channel HS-SCCH to the terminal A, for example, the base station 1 measures the data volume to the terminal A (step ST1), and makes a decision as to whether the data volume is greater than the upper limit of the currently assigned control channel HS-SCCH (step ST2).

If the data volume is greater than the upper limit of the currently assigned control channel HS-SCCH, the group to which the terminal A belongs is changed to a group of control channels HS-SCCH with a data volume greater than that of the current control channel HS-SCCH (step ST3).

Subsequently, the base station 1 makes a decision as to whether the data volume is less than the lower limit of the currently assigned control channel HS-SCCH (step ST4).

If the data volume is less than the lower limit of the currently assigned control channel HS-SCCH, the group to which the terminal A belongs is changed to a group of control channels HS-SCCH with a data volume less than that of the current control channel HS-SCCH (step ST5).

Subsequently, the base station 1 places the control information on a control channel HS-SCCH of the group to which the terminal A belongs at present (step ST6), and places the data to the terminal A on the shared channel HS-DSCH (step ST7).

Thus, the individual mobile stations 2 can be divided into groups in accordance with the data volumes at the first transmission to the mobile station 2. As a result, the present embodiment can make effective use of the single shared channel HS-DSCH.

### INDUSTRIAL APPLICABILITY

As described above, the mobile communication system in accordance with the present invention is suitable for reducing the power consumption and hardware resources of mobile stations, when the base station and mobile stations carry out radio communication by using a plurality of control channels and a shared channel.

## Claims

1. A mobile communication system in which a base station (1) and mobile stations (2) carry out radio communication by using a plurality of control channels (HS-SCCH) and a shared channel (HS-DSCH), wherein
the base station transmits, when transmitting data to a mobile station using the shared channel, control information, which is necessary for the mobile station to receive the data, to the mobile station using a predetermined control channel; and
the mobile station receives the control information from the predetermined control channel, and receives the data from the shared channel referring to the control information.

2. A base station (1) that carries out radio communication with mobile stations (2) using a plurality of control channels (HS-SCCH) and a shared channel (HS-DSCH), wherein
the base station transmits, when transmitting data to a mobile station using the shared channel, control information, which is necessary for the mobile station to receive the data, using a predetermined control channel.

3. The base station according to claim 2, wherein when transmitting the control information to the mobile station using the predetermined control channel, the base station transmits the control information intermittently.

4. The base station according to claim 3, wherein the base station accepts changes of a transmitting cycle of the control information.

5. The base station according to claim 2, wherein the base station switches the control channel that transmits the control information in accordance with preset switching conditions.

6. The base station according to claim 2, wherein when switching the control channel, the base station transmits switching information about the control channel to the mobile station.

7. The base station according to claim 2, wherein the base station divides the mobile stations into groups in accordance with a transmission volume of data to each mobile station, selects simultaneous transmission target mobile stations from the groups, and assigns the plurality of control channels to the simultaneous transmission target mobile stations.

8. A mobile station (2) that carries out radio communication with a base station (1) using a plurality of control channels (HS-SCCH) and a shared channel (HS-DSCH), wherein when the base station transmits, when transmitting data using the shared channel, control information, which is necessary for the mobile station to receive the data, using a predetermined control channel, the mobile station receives the control information from the predetermined control channel, and receives the data from the shared channel referring to the control information.

9. The mobile station according to claim 8, wherein the mobile station intermittently receives the control information transmitted from the base station via the predetermined control channel.

10. The mobile station according to claim 9, wherein the mobile station accepts changes of a receiving cycle of the control information.

11. The mobile station according to claim 8, wherein the mobile station switches the control channel for receiving the control information in accordance with preset switching conditions.

12. The mobile station according to claim 8, wherein the mobile station receives switching information about the control channel from the base station, and switches the control channel in accordance with the switching information.
